(19) Europäisches Patentamt
European Patent Office
Office européen des brevets

(11) **EP 1 767 398 B1**

(12) **EUROPEAN PATENT SPECIFICATION**

(45) Date of publication and mention
of the grant of the patent:
**26.11.2008 Bulletin 2008/48**

(51) Int Cl.:
***B60Q 1/00*** *(2006.01)*     ***B60Q 1/18*** *(2006.01)*

(21) Application number: **06018145.0**

(22) Date of filing: **30.08.2006**

(54) **Vehicle with enhanced perceived accuracy**

Fahrzeug mit erhöhter wahrgenommener Genauigkeit

Véhicule avec exactitude perçue augmentée

(84) Designated Contracting States:
**DE GB**

(30) Priority: **26.09.2005 JP 2005277193**

(43) Date of publication of application:
**28.03.2007 Bulletin 2007/13**

(73) Proprietor: **HONDA MOTOR CO., LTD.**
**Tokyo 107-8556 (JP)**

(72) Inventors:
• **Sakamoto, Mari**
**Wako-shi**
**Saitama**
**351-0193 (JP)**
• **Uematsu, Isao**
**Wako-shi**
**Saitama**
**351-0193 (JP)**
• **Maruyama, Kazuyuki**
**Wako-shi**
**Saitama**
**351-0193 (JP)**
• **Tsutsumi, Yojiro**
**Wako-shi**
**Saitama**
**351-0193 (JP)**

(74) Representative: **Rupp, Christian et al**
**Mitscherlich & Partner**
**Patent- und Rechtsanwälte**
**Sonnenstrasse 33**
**80331 München (DE)**

(56) References cited:
EP-A- 1 645 466     EP-A1- 1 473 215
WO-A- 98/22308     JP-A- 2003 213 644
US-A- 5 590 947     US-A1- 2005 094 409

**Description**

BACKGROUND OF THE INVENTION

1. FIELD OF THE INVENTION

The present invention relates to a vehicle of which a perceived accuracy is enhanced.

2. DESCRIPTION OF THE RELATED ART

Generally in a traffic environment where a large variety of vehicles run, a larger vehicle is apt to be firstly found by a driver of another vehicle and a pedestrian. In addition, a smaller vehicle such as a two-wheeled vehicle is seen as farther than a larger vehicle such as a truck, and a speed of the former is also felt slower.

For example, in a case that a two-wheeled vehicle and a truck of which distances from own vehicle are same are nearing from an opposite lane during waiting for a right turn at an intersection, a driver is apt to firstly find the truck. Even if a two-wheeled vehicle is perceived to be farther, and the vehicle and a truck run at a same speed, the vehicle results in being perceived to be slower.

In order to solve such the problem is conventionally disclosed a technology of attaching a lighting for enhancing a perceived accuracy at a front side and rear side of a two-wheeled vehicle (see Japanese Patent Laid-Open Publication No. 2003-300488).

In addition, in order to make a driver and a pedestrian recognize an existence of a four-wheeled vehicle during daytime is disclosed a technology of arranging a daytime-run light at lower portion of a headlight, and lighting the light during daytime (see Japanese Patent Laid-Open Publication No. 2004-51080).

However, although attaching vehicle supplementary lights to respective proper positions of a two-wheeled vehicle and a four-wheeled vehicle contributes to enhancing a perceived accuracy of a distance and a speed for each vehicle, a problem cannot be solved that the distance and the speed are differently perceived between different kinds of vehicles. In addition, the technology disclosed in the Japanese Patent Laid-Open Publication No. 2004-51080 cannot grasp a change of a plane size when recognized by eye, and an accuracy in perceiving a speed is not enhanced, because daytime-run lights are arranged in a row at lower portion of a headlight.

Consequently, there is a need for enhancing a perceived accuracy of a vehicle.

SUMMARY OF THE INVENTION

In order to solve the problem, the present invention provides a vehicle comprising a vehicular lighting unit according to claim 1 and a method for attaching a vehicular lighting unit according to claim 6.

In accordance with such the vehicular lighting unit, because supplementary lights having an equivalent color and brightness are plurally arranged, changing a vertical position and a horizontal position, and thereby the plurality of the supplementary lights are grasped as a combination and like a plane, a perceived accuracy of the vehicle is enhanced.

The supplementary lights are arranged at equivalent positions for any one of a two-wheeled vehicle, a four-wheeled passenger vehicle, and a large size vehicle.

Thus supplementary lights are arranged at equivalent positions even if vehicle kinds are different, and thereby the vehicle can be perceived with an equivalent distance and speed regardless of the vehicle size.

Then in the lighting unit each of the supplementary lights arranged outside is preferably in a range of 460 to 1715 mm in a vertical direction. In addition, at least three brightnesses out of the supplementary lights are preferably in a range of $\pm$ 40% from an average of the brightnesses. Moreover, in the supplementary lights each one arranged outside is preferably in a range of 240 to 840 mm in a horizontal direction.

A plurality of supplementary lights are arranged in such the ranges, and thereby become easier to be recognized as a combination. In addition, if in such the ranges, supplementary lights can be arranged at proper positions in various vehicle kinds.

In addition, it is preferable that the supplementary lights are symmetrically arranged, specifically, from center of left and right of the vehicle. Thus the vehicle position can be accurately perceived.

The present invention provides a vehicle where a vehicular lighting unit thus described is attached and thereby a perceived accuracy of the vehicle is enhanced..

BRIEF DESCRIPTION OF THE DRAWINGS

FIG. 1A is a front view showing a four-wheeled passenger vehicle where a vehicular lighting unit related to an embodiment of the present invention is attached; FIG. 1B is a drawing showing a preferable attachment range of supplementary lights.

FIG. 2 is a CIE 1976 UCS chromaticity diagram (XYZ color system) in JIS Z 8729.

FIGS. 3A and 3B are front views respectively showing examples where a vehicular lighting unit is applied to a two-wheeled vehicle.

FIGS. 4A and 4B are side views respectively showing cases of placing supplementary lights of a vehicular lighting unit at lower portion of a two-wheeled vehicle; FIG. 4C is a front view showing a case of placing supplementary lights of a vehicular lighting unit at upper portion of a two-wheeled vehicle.

FIG. 5 is a front view showing a case of placing a vehicular lighting unit in a large size vehicle.

FIG. 6 is a conceptual drawing showing an experimental method of a first example.

FIGS. 7A and 7B show an experimental condition of each example; FIG. 7A is a drawing illustrating symbols showing arranged positions of supplementary lights; and FIG. 7B is a table showing an experimental condition of such the arranged positions shown with the symbols in FIG. 7A.

FIG. 8 is a graph showing results of examples 1-1 and 1-2.

FIG. 9 is a graph showing results of examples 2-1 and 2-2.

FIG. 10 is a graph showing results of examples 3-1, 3-2, and 3.3.

FIG. 11A is a drawing showing an arrangement of supplementary lights when the second examples are performed; FIG. 11B is a graph showing their results.

FIG. 12A and 12B are drawings showing an arrangement of supplementary lights when the third examples are performed; FIG. 12C is a graph showing their results.


BEST MODE FOR CARRYING OUT THE INVENTION

[FIRST EMBODIMENT]

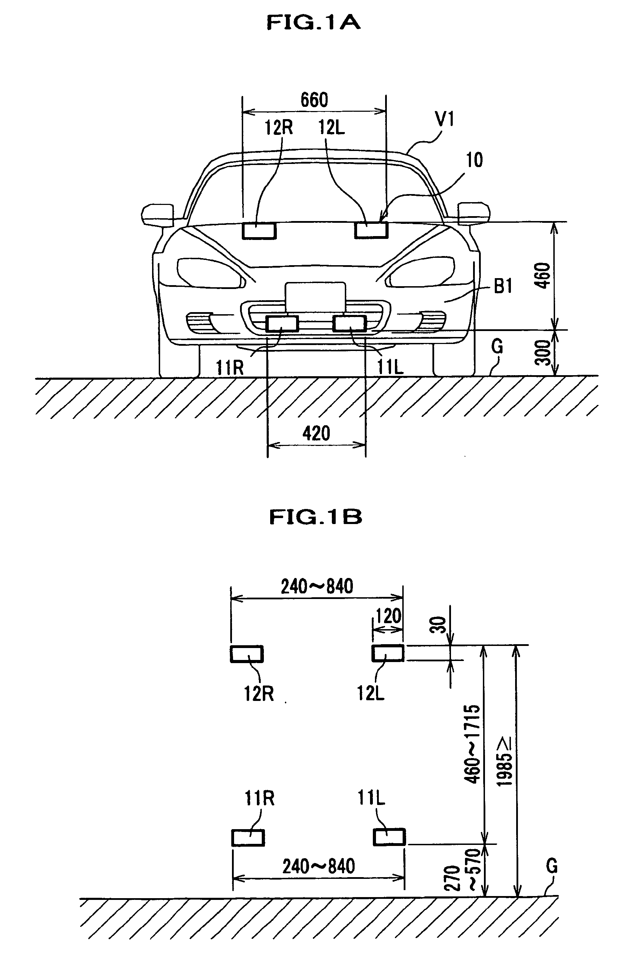

Here will be described a first embodiment of the present invention in detail, referring to drawings as needed. FIG. 1A is a front view showing a four-wheeled passenger vehicle where a vehicular lighting unit related to the embodiment of the present invention is attached; FIG. 1B is a drawing showing a preferable attachment range of supplementary lights. Meanwhile, hereafter, up/down, left/right, and front/rear are assumed to mean up and down, left and right, and front and rear of a vehicle.

As shown in FIG. 1A, to a vehicle V1 of a four-wheeled passenger vehicle is attached a vehicular lighting unit 10 at a front side, that is, so as to light front. The vehicular lighting unit 10 comprises four supplementary lights 11R, 11L, 12R, and 12L. The four supplementary lights 11R, 11L, 12R, and 12L are symmetrically arranged, making center of left/right of the vehicle V1 to be a border.

Making a description more in detail, the supplementary lights 11R and 11L are respectively horizontally arranged side by side at positions near ground G, for example, at a position of 300 mm from the ground G, and are fixed to a bumper B1. In addition, the supplementary lights 11R and 11L are arranged, making the center of the left/right of the vehicle V1 to be the border, and arranged at a width of 420 mm in an outside distance of each of the supplementary lights 11R and 11L.

The supplementary lights 12R and 12L are horizontally arranged side by side in a left/right (horizontal) direction at positions higher than those of the supplementary lights 11R and 11L. For example, the supplementary lights 12R and 12L are arranged so that their upper end positions respectively become 460 mm from lower end positions of the supplementary lights 11R and 11L. In addition, the supplementary lights 12R and 12L are symmetrically arranged, making the center of the left/right of the vehicle V1 to be the border, and arranged at a width of 660 mm in an outside distance of each of the supplementary lights 12R and 12L.

As the four supplementary lights 11R, 11L, 12R, and 12L are used such ones that are a same color and brightness and recognized from a human by eye.

Here, if a same color is in a range of not being felt oddly, compared to a basic lighting color, it is not specifically limited; however, in a case that a viewing angle for an observed lighting is ≤4°, a color is preferable of which a chromaticity from a chromaticity point of a basic lighting color (F1) is within a definite range in the CIE (Commission Internationale de l'Eclairage) 1976 UCS (Uniform-Chromaticity-Scale) chromaticity diagram (XYZ color system) (defined in JIS (Japanese Industrial Standard) Z 8729). For example, in a case that the chromaticity point of the lighting color (F1) is F1($u_1'$, $v_1'$), and that of a lighting color (F2) compared is F2($u_2'$, $v_2'$), a chromaticity difference $\Delta E$ between the chromaticity point F1 and the chromaticity point F2 are expressed in the following equation (1):

$$\Delta E = \sqrt{((u_1'-u_2')^2 + (v_1'-v_2')^2)} \qquad \text{Eq. (1)}$$

For example, it is preferable to make a color, of which the chromaticity difference $\Delta E$ expressed in the equation (1) is $\leq 0.10$, to be a same color.

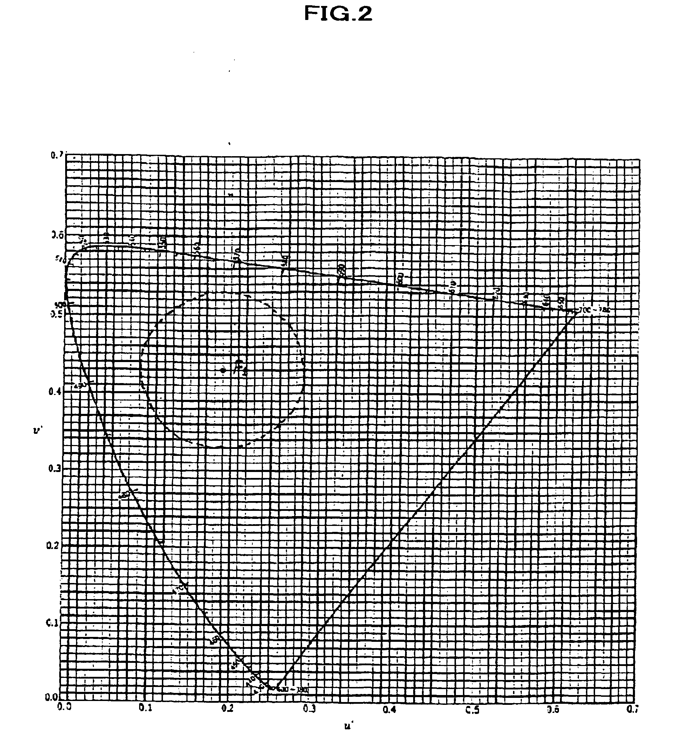

Showing a chromaticity diagram for reference, FIG. 2 shows the CIE 1976 UCS chromaticity diagram (XYZ color system) (extracted from JIS Z 8729), and as an area surrounded by dotted line, a range is shown where the chromaticity difference $\Delta E$ is $\leq 0.10$ from the chromaticity point F1($u_1'$, $v_1'$) of the basic lighting color (F1).

In addition, a same brightness means a brightness of a range of $\pm 40\%$ from an average of that of each supplementary light. Mentioning the example of the embodiment, it is meant that the four supplementary lights 11R, 11L, 12R, and 12L are respectively in a range of $\pm 40\%$ from an average of their brightnesses.

An arranged position of each of the supplementary lights 11R, 11L, 12R, and 12L is preferably provided, as shown in FIG. 1B, in a range of 240 to 840 mm in the left/right (horizontal) direction and 460 to 1715 mm in the up/down (vertical) direction. Then a height of the supplementary lights 11R, 11L arranged below is preferably from 270 to 570 mm from the ground G. Particularly, in a case that a driver of another vehicle and a pedestrian perceive a distance between themselves and a vehicle, because it is known that the nearer a distance between the ground, where a vehicle exists, and a supplementary light is, the further a perceived accuracy is enhanced (the Japanese Patent Laid-Open Publication No. 2003-300488), the supplementary lights 11R, 11L arranged below are preferably arranged at positions as near as possible from the ground, for example, around 270 to 370 mm from the ground G.

In addition, the supplementary lights 12R, 12L are preferably arranged in a range of $\leq 1985$ mm in height from the ground G.

Thus each of the supplementary lights 11R, 11L, 12R, and 12L is arranged, and thereby they are grouped and perceived as one combination. Therefore, if the supplementary lights 11R, 11L, 12R, and 12L move similarly, a driver of another vehicle and a pedestrian perceive a position (distance) and speed of the vehicle V1, making lights emitted from the grouped supplementary lights 11R, 11L, 12R, and 12L to be a clue.

Although a size of each supplementary light 11R, 11L, 12R, and 12L can be configured, for example, as shown in FIG. 1B, into a rectangle of a size of 120 mm in the horizontal direction and 30 mm in the vertical direction, it is not limited thereto. The supplementary lights 11R, 11L, 12R, and 12L may have a size that can be recognized by a driver of another vehicle and a pedestrian. Similarly, the supplementary lights 11R, 11L, 12R, and 12L may have a brightness that can be recognized by a driver of another vehicle and a pedestrian. In a case of deciding the size and the brightness, it is decided according to whether or not a driver of another vehicle and a pedestrian can recognize them in a situation of needing to perform some judgment. For example, in a case of thinking a right turn at an intersection, it is a distance to an oncoming vehicle that a right turn waiting vehicle judges whether to start or stop the right turn.

Assuming that a vehicle running on an opposite lane is running at a speed of 60 km/h, it is preferable that a supplementary light has at least a size of 30 mm in longitudinal and 1200 mm in traversal, and a brightness of $\geq 137$ cd/m$^2$ and such a sort not obstructing a traffic (for example, $\leq 300$ cd/m$^2$ according to a Japanese regulation).

Each supplementary light 11R, 11L, 12R, and 12L comprises at least one illuminant. The illuminant is, for example, an LED (Light Emitting Diode), an electric bulb, a discharge tube, and an EL (Electroluminescence).

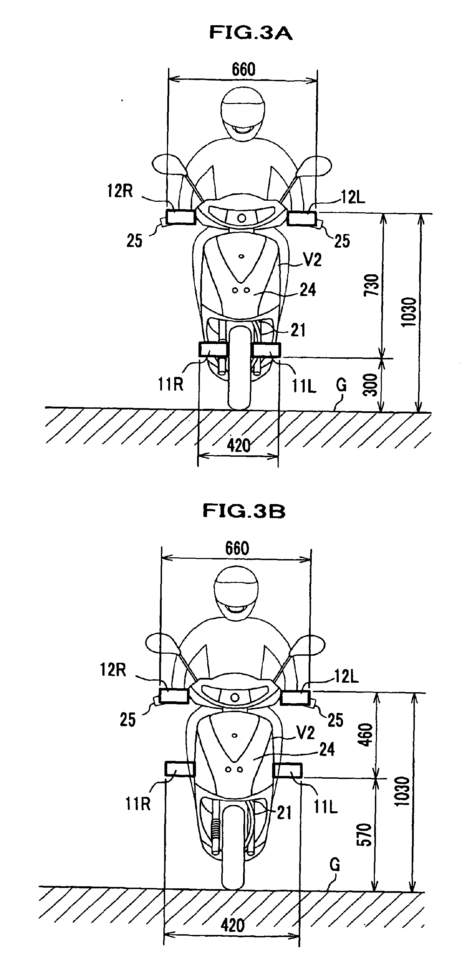

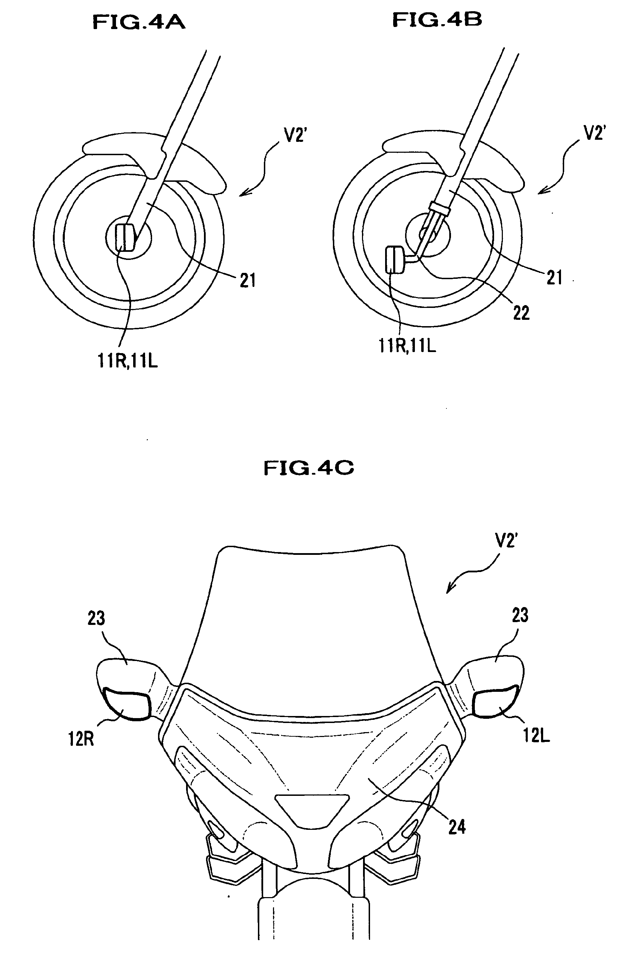

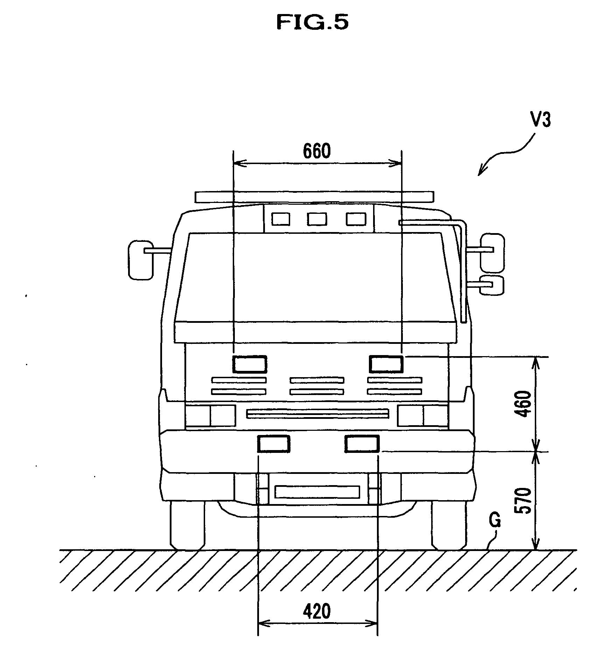

Such the vehicular lighting unit 10 can be applied not only to a four-wheeled passenger vehicle but also to other vehicle kinds. FIGS. 3A and 3B are front views respectively showing examples where a vehicular lighting unit is applied to a two-wheeled vehicle; FIGS. 4A and 4B are side views respectively showing cases of placing supplementary lights of a vehicular lighting unit at lower portion of a two-wheeled vehicle; FIG. 4C is a front view showing a case of placing supplementary lights of a vehicular lighting unit at upper portion of a two-wheeled vehicle; and FIG. 5 is a front view showing a case of placing a vehicular lighting unit in a large size vehicle.

As shown in FIG. 3A, in a case of applying the vehicular lighting unit 10 to a two-wheeled vehicle of a scooter type, the lower supplementary lights 11R, 11L can be attached to both sides of a front fork 21, and the upper supplementary lights 12R, 12L to a handle 25. Or else, as shown in FIG. 3B, if the upper supplementary lights 12R, 12L are fixed to both sides of a front cowl 24, it is possible to make a positional relationship similar to the four-wheeled passenger vehicle of a sport type shown in FIG. 1A.

As shown in FIG. 4A, in a case that the supplementary lights 11R, 11L of the vehicular lighting unit 10 are placed at lower portions of a two-wheeled vehicle V2' of a middle size or a large size, they can be directly fastened with bolts or fixed with bands at lower ends of the front fork 21, respectively. In addition, as shown in FIG. 4B, attaching a front stay 22 to the front fork 21 and the supplementary lights 11R, 11L to the stay 22, it is also possible to fix the supplementary lights 11R, 11L to positions slightly separate from the fork 21 in up/down, left/right, and front/rear.

In addition, although not shown, it is also possible to provide the supplementary lights 11R, 11L so as to be housed in the front fork 21 or to attach them to an undercowl.

As shown in FIG. 4C, in a case of placing the supplementary lights 12R, 12L of the vehicular lighting unit 10 at upper portions of the two-wheeled vehicle V2', it is possible to respectively place them at the front side of rearview mirrors 23 so as to be housed therein. Although not shown, the supplementary lights 12R, 12L may also be fixed to the front cowl 24 or a handle.

In addition, in a case of attaching the vehicular lighting unit 10 to a large size vehicle, because the vehicle has a comparatively large and flat front side, it is preferable as shown in FIG. 5 to attach each supplementary light 11R, 11L, 12R, and 12L to front side of a vehicle V3 according to an arrangement similar to other vehicle kinds (for example, the four-wheeled passenger vehicle of the sport type in FIG. 1A).

Thus arranging each supplementary light 11R, 11L, 12R, and 12L in the range shown in FIG. 1B, it is possible to grasp each as a unity and to arrange each at a same position in a wide range of vehicle kinds.

In such the vehicular lighting unit 10 and a vehicle attached with the unit 10, a vehicle position is grasped by the unit 10 regardless of a vehicle body size; the unit 10 and the vehicle are perceived as a similar position and speed by a driver of another vehicle and a pedestrian regardless of its vehicle kind. Therefore, even in a traffic environment where various vehicle kinds are mixed, a position and speed of each vehicle with the vehicular lighting unit 10 are correctly perceived, and thereby a smooth vehicle traffic can be realized.

The present invention is not limited to the embodiment, and it goes without saying that the embodiment can be appropriately changed and performed.

For example, a number of supplementary lights may not be four, and may be three or not less than five. Also in this case it is preferable that each supplementary light is symmetrically arranged, making center of left/right of a vehicle to be a border.

In addition, if although it is preferable that each supplementary light has an equivalent color and brightness, not less than three supplementary lights have the equivalent color and brightness, it is acceptable that a color of some supplementary light is slightly different or a brightness thereof is low.

[Example]

Next will be described examples of the present invention.

<First Example>

A first example is an example of experimenting respective relationships of supplementary lights.

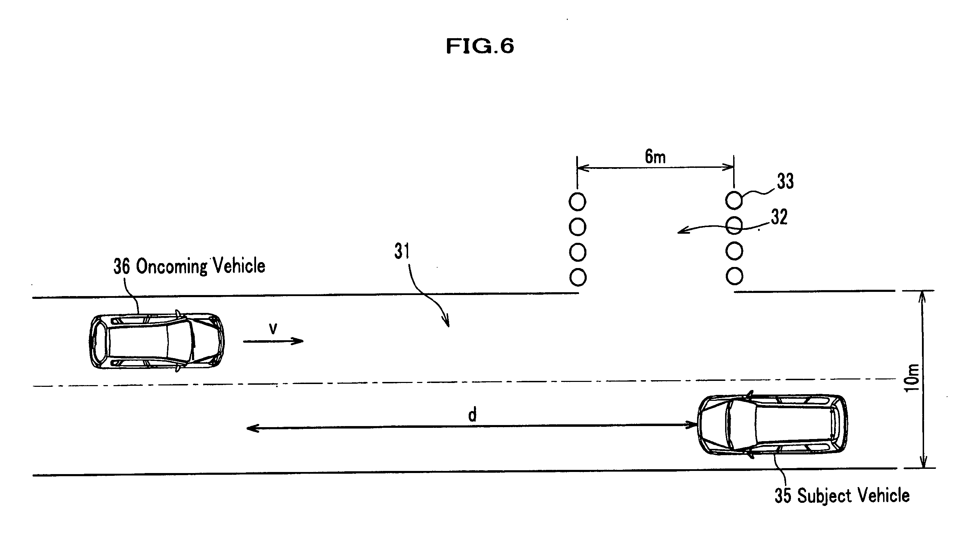

FIG. 6 is a conceptual drawing showing an experimental method of the first example. As shown in FIG. 6, a subject gets on a subject vehicle 35 on a road 31 of a width of 10 m; on an opposite lane an oncoming vehicle 36 is made to run at a predetermined speed v. Aligning cones 33 on a road 32 corresponding to a sideway of a width of 6 m, the road 32 is connected to the road 31 in advance, and the subject vehicle 35 is made to stop in a state of waiting for a right turn from the road 31 to the road 32. As a driver of the subject vehicle 35, the subject, looks for the oncoming vehicle 36 to near, he/she steps on a brake pedal at timing of believing, "if the oncoming vehicle 36 nears more than this, I cannot turn to the right."

Using a distance d between the subject vehicle 35 and the oncoming vehicle 36 and speed v of the latter of this time, and calculating d/v, a time is obtained from the timing, when the brake pedal was stepped on, to that when the vehicles 35 and 36 pass by. The time is called a critical time gap. Generally, in a traffic environment, because perceiving a two-wheeled vehicle farther and slower causes an erroneous action of a driver, it is assumed in the example that the larger the critical time gap is, the higher a perceived accuracy is evaluated.

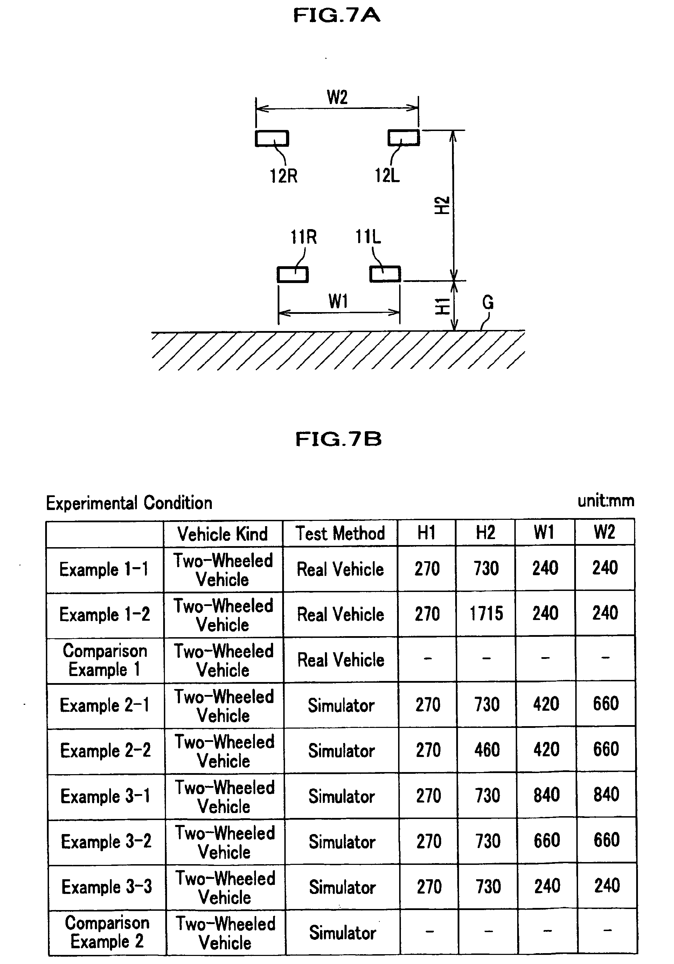

In the example, under each condition shown in FIGS. 7A and 7B was experimented how the critical time gap was changed according to positions of supplementary lights.

FIGS. 7A and 7B show an experimental condition of each example; FIG. 7A is a drawing illustrating symbols showing arranged positions of supplementary lights; and FIG. 7B is a table showing experimental conditions such as the arranged positions shown with the symbols in FIG. 7A. Meanwhile, in FIG. 7B a unit of a numeral is mm, and "-" in a column of a comparison example means that a supplementary light is not attached.

Firstly will be described examples 1-1 and 1-2.

The examples 1-1 and 1-2 were experimented by real vehicles, changing a distance between the upper supplementary lights 12R, 12L and the lower supplementary lights 11R, 11L. In the experiments critical time gaps were measured and averaged for five subjects.

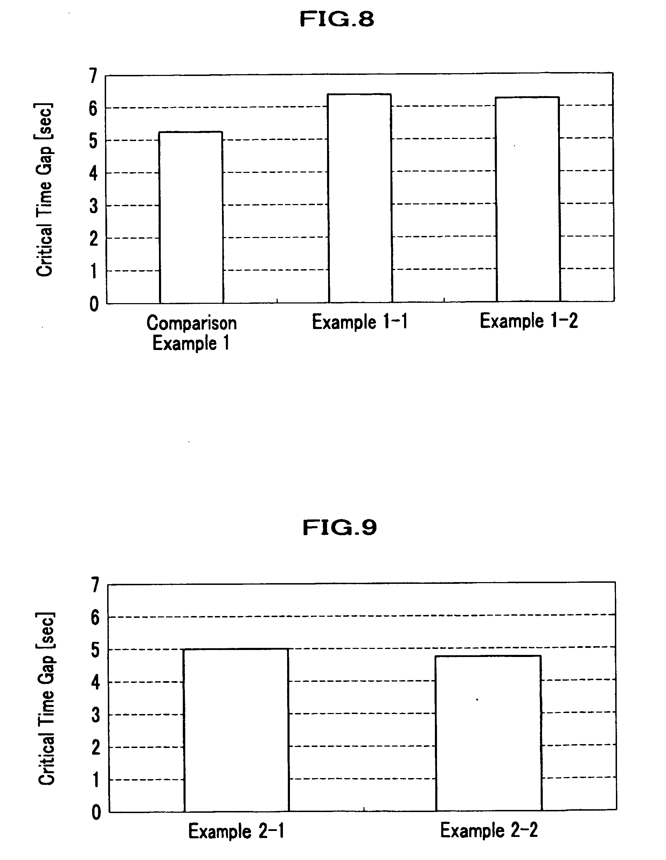

As the result, as shown in FIG. 8, the critical time gap of a comparison example 1 where a vehicular lighting unit was not attached was around 5.3 seconds; whereas that of the example 1-1 where the up/down distance (to be more accurate, a distance of outer profiles of supplementary lights, hereafter similar) of the supplementary lights 12R, 12L and 11R, 11L was 730 mm was 6.4 seconds, and that of the example 1-2 where the distance was 1715 mm was 6.3 seconds: both critical time gaps became larger by around one second, compared to that of the comparison example 1. In other words, in the both examples is enhanced the perceived accuracy of a distance and speed of the oncoming vehicle 36, compared to the comparison example 1, and there exists substantially no difference between the examples 1-1 and 1-2.

Next will be described examples 2-1 and 2-2.

The examples 2-1 and 2-2 were experimented by simulator, changing a distance between the left/right supplementary lights 12L, 11L and 12R, 11R. In the experiments critical time gaps were measured and averaged for four subjects.

As the result, as shown in FIG. 9, the critical time gap of the example 2-1 where the up/down distance of the supplementary lights 12R, 12L and 11R, 11L was 730 mm was 5.0 seconds, and that of the example 2-2 where the distance was 460 mm was 4.8 seconds: both critical time gaps became substantially same values. In other words, the both examples are proved to be recognized as a distance and speed of a same extent.

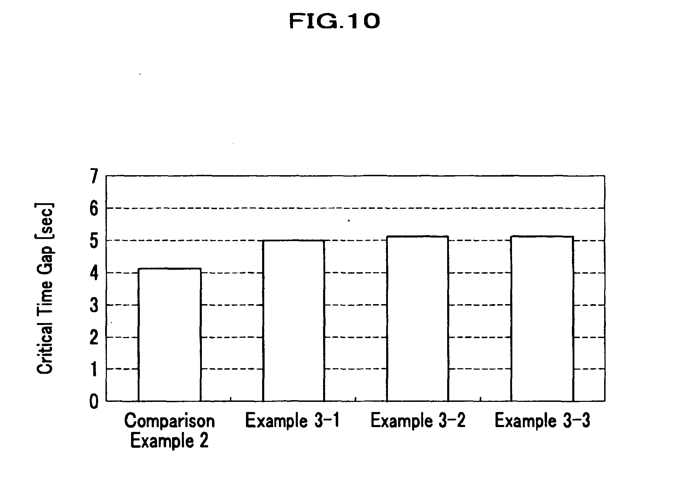

Meanwhile, as a conventional example compared to the examples 2-1 and 2-2, although there exists a comparison example 2 of FIG. 10, the critical time gap of the comparison example 2 is 4.2 seconds; also in accordance with the examples 2-1 and 2-2, it can be confirmed that the perceived accuracy of a distance and speed of a vehicle is enhanced thanks to a vehicular lighting unit.

In addition, a difference between the critical time gap values of the examples 1-1 and 1-2 and those of the examples 2-1 and 2-2 is that between a real vehicle and a simulator. Because it is confirmed that there occurs a difference of about one second, it can be said that a substantially same effect is recognized in the examples 1-1 and 1-2 and the examples 2-1 and 2-2.

Next will be described examples 3-1, 3-2, and 3.3.

The examples 3-1, 3-2, and 3.3 were experimented by simulator, changing a distance between left supplementary lights and right supplementary lights. As the result, as shown in FIG. 10, the critical time gap of a comparison example 2 where a vehicular lighting unit was not attached was around 4.1 seconds; whereas that of the example 3-1 where the left/right distance of the supplementary lights 12L, 11L and 12R, 11R was 840 mm was 5.0 seconds, that of the example 3-2 where the distance was 660 mm was 5.1 seconds, and that of the example 3-3 where the distance was 240 mm was 5.1 seconds: the three critical time gaps became larger than that of the comparison example 2 by around one second. In other words, it can be confirmed in the three examples that the perceived accuracy of a distance and a speed is enhanced. In addition, there exists substantially no difference between the examples 3-1, 3-2, and 3-3; it can be confirmed that an equivalent effect can be obtained in the distance of 240 to 840 mm

Thus in the range of 460 to 1715 mm in up/down distance and 240 to 840 mm in left/right distance of the supplementary lights 12L, 11L and 12R, 11R, an upper unit and a lower unit are recognized as a group; it can be confirmed that the perceived accuracy of a vehicle is enhanced. Moreover, it can also be confirmed in the range that a substantially equivalent effect can be obtained.

<Second Example>

Next will be described a second example of comparing an effect between a two-wheeled vehicle (scooter) and a four-wheeled passenger vehicle.

In the second example the vehicular lighting units of the present invention are respectively attached to the two-wheeled vehicle and the four-wheeled passenger vehicle, and the critical time gaps thereof were measured.

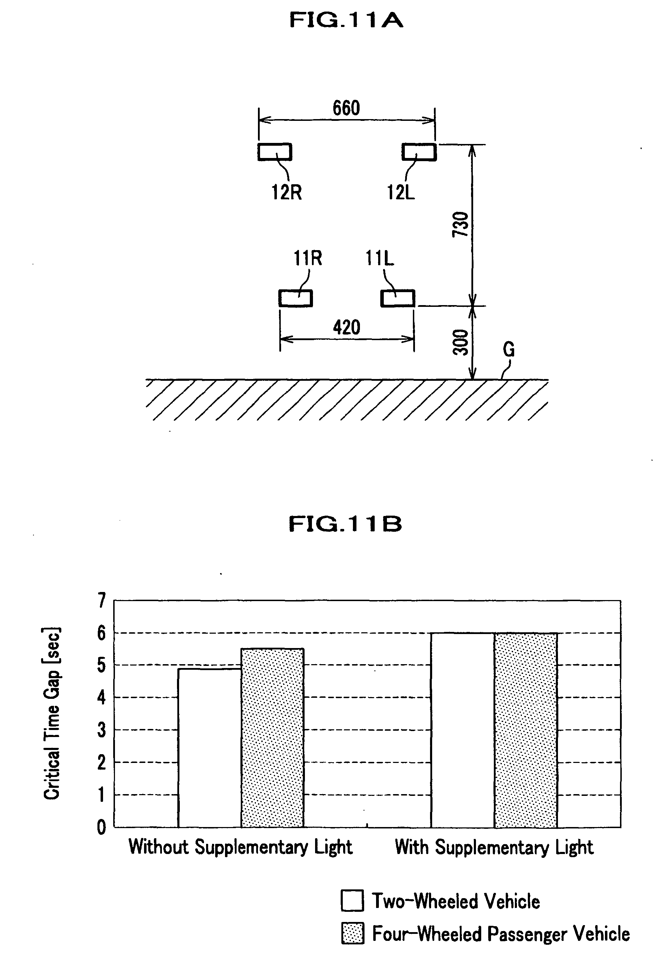

Each vehicular lighting unit was arranged, as shown in FIG. 11A, making the left/right distance of the lower supplementary lights 11R, 11L to be 420 mm; that of the upper supplementary lights 12R, 12L, 660 mm; the up/down distance of the upper and lower supplementary lights, 730 mm; and the distance from the ground G of the supplementary lights 11R, 11L, 300 mm.

An experimental method was performed by real vehicle.

As the result, as shown in FIG. 11B, in a case of there existing no supplementary light, the critical time gap of the two-wheeled vehicle was 4.9 seconds; that of the four-wheeled passenger vehicle was 5.5 seconds. In other words, it can be said that the two-wheeled vehicle was perceived farther and slower.

On the other hand, in a case of there existing supplementary lights, the critical time gaps of both of the two-wheeled vehicle and the four-wheeled passenger vehicle were 6.0 seconds and same. In other words, it can be said that both of the two-wheeled vehicle and the four-wheeled passenger vehicle were perceived as a same distance and speed.

Accordingly, it is confirmed that the present invention not only enhances the perceived accuracy of a distance and a speed but also has an effect of perceiving the distance and the speed as same even between different vehicle kinds.

<Third Example>

A third example compares an effect between cases of numbers of supplementary lights, two and four.

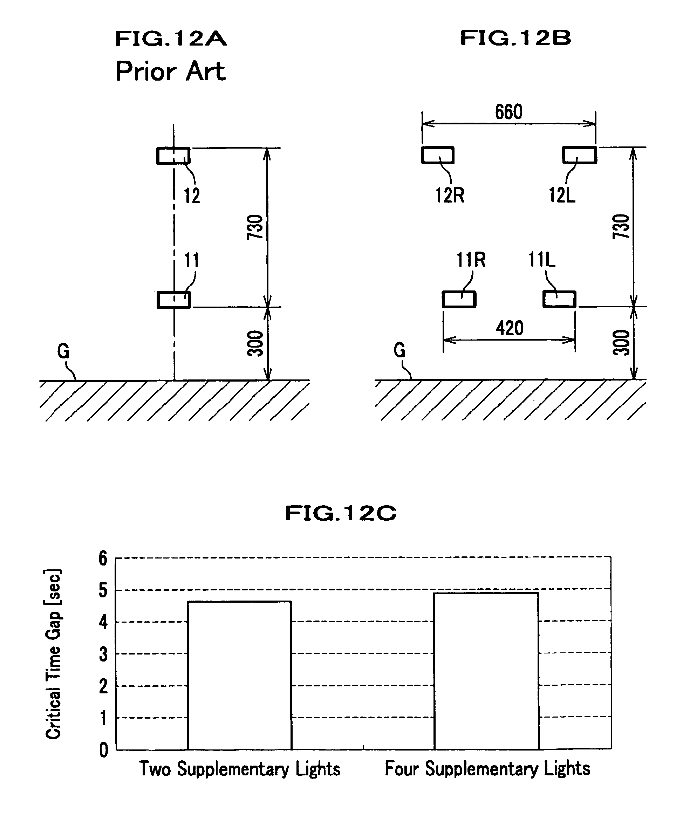

With respect to a two-wheeled vehicle (scooter) were measured the critical time gaps in a case that two supplementary lights 12, 11 were arranged up/down as shown in FIG. 12A; and in a case that the two supplementary lights 11R, 11L were arranged at its lower portion and the two supplementary lights 12R, 12L also at its upper portion. Meanwhile, the arrangement of the four supplementary lights 12R, 12L, 11R, and 11L was assumed to be similar to that of FIG. 11A. The experiment was performed by simulator, and its result for four subjects was averaged.

As the result, as shown in FIG. 12C, in the case that the two supplementary lights 12, 11 were provided up/down only, the critical time gap was 4.6 seconds; whereas in the case that the total four supplementary lights 12R, 12L, 11R, and 11L were provided at the lower and upper portions, the critical time gap was 4.9 seconds: an enhancement of the perceived accuracy of a distance and a speed is recognized.

Thus by arranging four supplementary lights not in a row but like a plane seen from front, it is confirmed that the perceived accuracy is more enhanced than a case of only two supplementary lights being arranged like a conventional technology.

**Claims**

1. A vehicle as, for example, a two-wheeled vehicle (V2, V2'), a four-wheeled passenger vehicle (V1), and a large size vehicle (V3), comprising:

   a vehicular lighting unit (10) having at least three supplementary lights (11R, 11L, 12R, 12L) arranged not to be in a row at a front side of the vehicle (V1, V2, V2', V3) and having an equivalent color, and being attached on the vehicle (V1, V2, V2', V3) in a specific range side-by-side in a horizontal direction and in a specific range distal from the ground in a vertical direction,

   **characterized in that**
   the position of the supplementary lights (11R, 11L, 12R, 12L) on the vehicle is an equivalent position with respect to all types of vehicles (V1, V2, V2', V3) in order to enhance a perceived accuracy of the vehicle (V1, V2, V2', V3).

2. The vehicle according to claim 1, wherein in the supplementary lights (11R, 11L, 12R, 12L) each one arranged outside is in a range of 460 to 1715 mm in a vertical direction.

3. The vehicle according to any one of claims 1 or 2, wherein at least three brightnesses out of the supplementary lights (11R, 11L, 12R, 12L) are in a range of $\pm$ 40% from an average of the brightnesses.

4. The vehicle according to any one of claims 1 to 3, wherein in the supplementary lights (11R, 11L, 12R, 12L) each one arranged outside is in a range of 240 to 840 mm in a horizontal direction.

5. The vehicle according to any one of claims 1 to 4, wherein the supplementary lights (11R, 11L, 12R, 12L) are symmetrically arranged.

6. A method for attaching a vehicular lighting unit (10) to a vehicle as, for example, a two-wheeled vehicle (V2, V2'), a four-wheeled passenger vehicle (V1), and a large size vehicle (V3), comprising the steps of

   attaching the vehicular lighting unit (10) having at least three supplementary lights (11R, 11L, 12R, 12L) and having an equivalent color to the vehicle (V1, V2, V2', V3) such that the supplementary lights (11R, 11L, 12R, 12L) are arranged not to be in a row at a front side of the vehicles (V1, V2, V2', V3), and attaching the supplementary lights (11R, 11L, 12R, 12L) on the vehicle (V1, V2, V2', V3) in a specific range side-by-side in a horizontal direction and in a specific range distal from the ground in a vertical direction,

   wherein the position of the supplementary lights (11R, 11L, 12R, 12L) on the vehicle is an equivalent position with respect to all types of vehicles (V1, V2, V2', V3) in order to enhance a perceived accuracy of the vehicle (V1, V2, V2', V3).

**Patentansprüche**

1. Fahrzeug, zum Beispiel ein zweirädriges Fahrzeug (V2, V2'), ein vierrädriges Passagierfahrzeug (V1) und ein Großfahrzeug (V3), umfassend:

eine Fahrzeugbeleuchtungseinheit (10) mit wenigstens drei Zusatzlichtern (11R, 11L, 12R, 12L), die nicht in einer Reihe an einer Vorderseite des Fahrzeugs (V1, V2, V2', V3) angeordnet sind und eine gleichwertige Farbe aufweisen und an dem Fahrzeug (V1, V2, V2', V3) in einem bestimmten Bereich nebeneinander in einer horizontalen Richtung und in einem bestimmten, vom Boden distalen Bereich in einer vertikalen Richtung angebracht sind,

**dadurch gekennzeichnet, dass**
die Lage der Zusatzlichter (11R, 11L, 12R, 12L) an dem Fahrzeug eine äquivalente Lage bezüglich aller Fahrzeugarten (V1, V2, V2', V3) ist, um eine wahrgenommene Genauigkeit des Fahrzeugs (V1, V2, V2', V3) zu verbessern.

**2.** Fahrzeug gemäß Anspruch 1, worin jedes Zusatzlicht (11R, 11 L, 12R, 12L) außen in einem Bereich von 460 bis 1715 mm in einer vertikalen Richtung angeordnet ist.

**3.** Fahrzeug gemäß einem der vorhergehenden Ansprüche, worin wenigstens drei Helligkeiten der Zusatzlichter (11R, 11L, 12R, 12L) in einem Bereich von $\pm 40\%$ eines Mittelwerts der Helligkeiten liegen.

**4.** Fahrzeug gemäß einem der vorhergehenden Ansprüche, worin jedes Zusatzlicht (11R, 11 L, 12R, 12L) außen in einem Bereich von 240 bis 840 mm in einer horizontalen Richtung angeordnet ist.

**5.** Fahrzeug gemäß einem der vorhergehenden Ansprüche, worin die Zusatzlichter (11R, 11L, 12R, 12L) symmetrisch angeordnet sind.

**6.** Verfahren zum Anbringen einer Fahrzeugbeleuchtungseinheit (10) an einem Fahrzeug, zum Beispiel einem zweirädrigen Fahrzeug (V2, V2'), einem vierrädrigen Passagierfahrzeug (V1) und einem Großfahrzeug (V3), umfassend die Schritte:

Anbringen der Fahrzeugbeleuchtungseinheit (10), die wenigstens drei Zusatzlichter (11R, 11L, 12R, 12L) und eine gleichwertige Farbe aufweist, an dem Fahrzeug (V1, V2, V2', V3) derart, dass die Zusatzlichter (11R, 11L, 12R, 12L) nicht in einer Reihe an einer Vorderseite des Fahrzeugs (V1, V2, V2', V3) angeordnet sind, und Anbringen der Zusatzlichter (11R, 11L, 12R, 12L) an dem Fahrzeug (V1, V2, V2', V3) in einem bestimmten Bereich nebeneinander in einer horizontalen Richtung und in einem bestimmten, vom Boden distalen Bereich in einer vertikalen Richtung,

worin die Lage der Zusatzlichter (11R, 11L, 12R, 12L) an dem Fahrzeug eine äquivalente Lage bezüglich aller Fahrzeugarten (V1, V2, V2', V3) ist, um eine wahrgenommene Genauigkeit des Fahrzeugs (V1, V2, V2', V3) zu verbessern.

## Revendications

**1.** Véhicule, par exemple, un véhicule à deux roues (V2, V2'), un véhicule à passager à quatre roues (V1), et un véhicule de grande taille (V3), comprenant :

une unité d'éclairage de véhicule (10), comprenant au moins trois feux (11R, 11L, 12R, 12L) supplémentaires, agencés pour ne pas être en ligne sur un côté avant du véhicule (V1, V2, V2', V3) et ayant une couleur équivalente, et étant attachés sur le véhicule (V1, V2, V2', V3), selon un espacement spécifique, côte à côte, dans une direction horizontale, et selon un espacement spécifique, à distance du sol, dans une direction verticale,

**caractérisé en ce que**
la position des feux (11R, 11L, 12R, 12L) supplémentaires sur le véhicule est une position équivalente par rapport à tous les types de véhicules (V1, V2, V2', V3), de manière à améliorer la précision perçue du véhicule (V1, V2, V2', V3).

**2.** Véhicule selon la revendication 1, dans lequel, dans les feux (11R, 11L, 12R, 12L) supplémentaires, chacun est agencé extérieurement, dans une fourchette d'espacement de 460 à 1715 mm dans une direction verticale.

**3.** Véhicule selon l'une quelconque des revendications 1 ou 2, dans lequel **caractérisé en ce qu'**au moins trois intensités d'illumination des feux (11R, 11L, 12R, 12L) supplémentaires sont dans une fourchette de $\pm$ 40 % par

rapport à une moyenne des intensités d'illumination.

4. Véhicule selon l'une quelconque des revendications 1 à 3, dans lequel, dans les feux (11R, 11L, 12R, 12L) supplémentaires, chacun est agencé extérieurement, dans une fourchette d'espacement de 240 à 840 mm dans une direction horizontale.

5. Véhicule selon l'une quelconque des revendications 1 à 4, dans lequel les feux (11R, 11L, 12R, 12L) supplémentaires sont agencés symétriquement.

6. Procédé pour attacher une unité d'éclairage pour véhicule (10) à un véhicule, tel que, par exemple, un véhicule à deux roues (V2, V2'), un véhicule à passager à quatre roues (V1), et un véhicule de grande taille (V3), comprenant les étapes consistant à :

attacher l'unité d'éclairage de véhicule (10), comprenant au moins trois feux (11R, 11L, 12R, 12L) supplémentaires et ayant une couleur équivalente, sur le véhicule (V1, V2, V2', V3), de manière que les feux (11R, 11L, 12R, 12L) supplémentaires soient agencés pour ne pas être en ligne sur un côté avant du véhicule (V1, V2, V2', V3), et
attacher les feux (11R, 11L, 12R, 12L) supplémentaires sur le véhicule (V1, V2, V2', V3), selon un espacement spécifique, côte à côte, dans une direction horizontale, et selon un espacement spécifique, à distance du sol, dans une direction verticale,

dans lequel la position des feux (11R, 11L, 12R, 12L) supplémentaires sur le véhicule est une position équivalente par rapport à tous les types de véhicules (V1, V2, V2', V3), de manière à améliorer la précision perçue du véhicule (V1, V2, V2', V3).

# FIG.1A

# FIG.1B

# FIG.2

## FIG.3A

## FIG.3B

# FIG.4A

V2'

21

11R,11L

# FIG.4B

V2'

21

22

11R,11L

# FIG.4C

V2'

23

23

12R

12L

24

# FIG.5

V3

660

460

570

420

G

# FIG.6

36 Oncoming Vehicle

31

v

6m

33

32

10m

d

35 Subject Vehicle

EP 1 767 398 B1

## FIG.7A

## FIG.7B

Experimental Condition                                                    unit:mm

|  | Vehicle Kind | Test Method | H1 | H2 | W1 | W2 |
|---|---|---|---|---|---|---|
| Example 1-1 | Two-Wheeled Vehicle | Real Vehicle | 270 | 730 | 240 | 240 |
| Example 1-2 | Two-Wheeled Vehicle | Real Vehicle | 270 | 1715 | 240 | 240 |
| Comparison Example 1 | Two-Wheeled Vehicle | Real Vehicle | – | – | – | – |
| Example 2-1 | Two-Wheeled Vehicle | Simulator | 270 | 730 | 420 | 660 |
| Example 2-2 | Two-Wheeled Vehicle | Simulator | 270 | 460 | 420 | 660 |
| Example 3-1 | Two-Wheeled Vehicle | Simulator | 270 | 730 | 840 | 840 |
| Example 3-2 | Two-Wheeled Vehicle | Simulator | 270 | 730 | 660 | 660 |
| Example 3-3 | Two-Wheeled Vehicle | Simulator | 270 | 730 | 240 | 240 |
| Comparison Example 2 | Two-Wheeled Vehicle | Simulator | – | – | – | – |

# FIG.8

# FIG.9

# FIG.10

## FIG.11A

## FIG.11B

□ Two-Wheeled Vehicle

▨ Four-Wheeled Passenger Vehicle

**FIG.12A**
**Prior Art**

**FIG.12B**

**FIG.12C**

**REFERENCES CITED IN THE DESCRIPTION**

**Patent documents cited in the description**

- JP 2003300488 A

- JP 2004051080 A